# EUROPÄISCHE PATENTSCHRIFT

(11) **EP 0 927 690 B1**
(45) Veröffentlichungstag und Bekanntmachung des Hinweises auf die Patenterteilung: **28.05.2003**
(21) Anmeldenummer: 98123493.3
(22) Anmeldetag: 14.12.1998
(51) Int. Cl.: B65G 33/14, B65G 33/26

(54) **Vorrichtung und Verfahren zum Fördern von Materialien**
Device and method for conveying materials
Dispositif et procédé pour transporter des produits

(30) Priorität: 29.12.1997 DE 19758039
(43) Veröffentlichungstag der Anmeldung: 07.07.1999
(73) Patentinhaber: Noggerath Holding GmbH & Co. KG, D-31708 Ahnsen (DE)
(72) Erfinder: Rodenbeck, Arno-Wilhelm, Dipl.-Ing.Dipl.-Wirt.-Ing, 31675 Bückeburg (DE); Kroos, Hein, Dr., 31737 Rinteln (DE)
(74) Vertreter: Gleiss, Alf-Olav, Dr.jur. Dipl.-Ing.

(56) Entgegenhaltungen:
- WO-A-88/09301
- FR-A- 2 417 451
- US-A- 5 562 029

## Beschreibung

Die Erfindung betrifft eine Vorrichtung zum Fördern von Materialien von einem ersten Niveau auf ein zweites höherliegendes Niveau gemäß Oberbegriff des Anspruchs 1 sowie ein Verfahren zum Fördern von Material von einem ersten Niveau auf ein höherliegendes zweites Niveau gemäß Oberbegriff des Anspruchs 20.

Vorrichtungen und Verfahren der hier angesprochenen Art sind bekannt. Sie werden beispielsweise zur Aufbereitung von Abwasser eingesetzt, das Kläranlagen zugeleitet werden soll. Bei der Aufbereitung von derartigen Abwässern ist es erforderlich, mineralische Materialien, beispielsweise Sande, von organischen Verunreinigungen zu befreien und aus dem Abwasser auszutragen. Dabei werden die mineralischen Materialien von einem ersten Niveau auf ein höherliegendes zweites Niveau gefördert. Derartige Verfahren und Vorrichtungen werden aber auch bei der Aufarbeitung von Müll eingesetzt, wobei hier eine Trennung der verschiedenen Materialien, die im Müll vorhanden sind, erfolgt und Materialien mit bestimmten Eigenschaften von einem ersten Niveau auf eine höherliegendes zweites Niveau gefördert werden. Bei der Aufbereitung von Müll wird dieser mit Hilfe von Wasser bearbeitet.

Bei derartigen Vorrichtungen und Verfahren werden zwei Spiralförderer eingesetzt, die in einem Winkel zueinander angeordnet sind, wobei beispielsweise ein im wesentlichen horizontaler erster Spiralförderer (Horizontalförderer) vorgesehen ist, der das zu fördernde Material einem im wesentlichen senkrechten zweiten Spiralförderer zuführt. Die Winkelstellung des zweiten Spiralförders zum ersten Spiralförderer hängt von den räumlichen Gegebenheiten ab, die bei der Aufarbeitung der Materialien vorgegeben sind. Es ist also auch sehr wohl möglich, daß der zweite Spiralförderer unter einem Winkel < 90° gegenüber dem ersten Spiralförderer verläuft.

Es hat sich herausgestellt, daß bei dem Transport des Materials im zweiten Spiralförderer Wasser in den ersten Spiralförderer zurückströmt und dabei Material aus dem zweiten Spiralförderer in den ersten Spiralförderer zurückverlagert. Insbesondere dann, wenn die Vorrichtung nicht kontinuierlich betrieben wird, tritt dieser Nachteil ein (siehe Offenbarung von Patentanmeldung US-A-5 562 029).

Es ist daher Aufgabe der Erfindung, eine Vorrichtung zum Fördern von Material zu schaffen, die diesen Nachteil nicht aufweist. Zur Lösung dieser Aufgabe wird eine Vorrichtung vorgeschlagen, die die in Anspruch 1 aufgeführten Merkmale zeigt. Sie zeichnet sich dadurch aus, daß eine Spirale im zweiten Spiralförderer an ihrem dem ersten Spiralförderer zugewandten einen Ende einen im Innenraum der Spirale angeordneten Zentralkörper umfaßt. Die Spirale, die im wesentlichen durch eine Wendel gebildet wird, zeichnet sich durch einen freien Innenraum aus, durch den Wasser und darin aufgeschwemmtes Material der Schwerkraft folgend hindurchströmen kann. Durch den im Innenraum dieser Spirale angeordneten Zentralkörper wird der hydraulische Widerstand der Spirale so weit erhöht, daß ein derartiger Rückstrom wesentlich reduziert, im Optimalfall praktisch vollständig verhindert wird. Innerhalb des zweiten Spiralförderers zurückströmendes Material wird aufgrund des Zentralkörpers verdichtet, so daß sich ein Pfropf bildet, der einen Rückstrom von Wasser aus dem zweiten Spiralförderer in den ersten Spiralförderer vermindert beziehungsweise praktisch ganz vermeidet.

Bei einem bevorzugten Ausführungsbeispiel der Vorrichtung ist die dem zweiten Spiralförderer zugeordnete zweite Spirale zumindest in ihrem ersten Ende als sogenannte Doppelspirale ausgebildet. Das heißt, es werden zwei ineinanderliegende Spiralwendel miteinander verbunden, so daß sich eine verbreiterte Wendel ergibt, deren freier Innendurchmesser reduziert ist. Auf dieser verbreiterten Wendel kann sich im Betrieb der Vorrichtung relativ viel Material ansammeln, so daß sich bei einem Rückstrom von Wasser eine Materialverdichtung ergibt, die das Zurückfließen des Wassers in den ersten Spiralförderer reduziert beziehungsweise verhindert. Es ist natürlich auch möglich, mehr als zwei Spiralen miteinander zu verbinden, was allerdings die Herstellungskosten beeinflußt.

Bevorzugt wird weiterhin eine Ausführungsform der Vorrichtung, die sich dadurch auszeichnet, daß die zweite Spirale Bereiche mit unterschiedlicher Steigung beziehungsweise mit verschiedenen Steigungsverhältnissen aufweist. Mit dem Begriff "Steigungsverhältnis" wird das Verhältnis des Innendurchmessers der Spirale zur Steigung beziehungsweise das Verhältnis des Außendurchmessers zur Steigung bezeichnet. Bevorzugt ist vorgesehen, daß die Steigung der zweiten Spirale an ihrem ersten Ende, also an den dem ersten Spiralförderer zugewandten Ende, kleiner ist als in den übrigen Bereichen. Diese einfache und damit kostengünstig realisierbare Ausgestaltung führt zu einer Materialverdichtung im Übergangsbereich zwischen dem ersten und zweiten Spiralförderer die einen Rückstrom von Wasser aus dem zweiten in den ersten Spiralförderer verhindert.

Bei einem weiteren bevorzugten Ausführungsbeispiel der Vorrichtung ist vorgesehen, daß auch die erste Spirale, die aus Kostengründen vorzugsweise als Einfachspirale ausgebildet ist, zumindest bereichsweise einen in ihrem Innenraum angeordneten Zentralkörper umfaßt. Dieser ist vorzugsweise an dem Ende der ersten Spirale eingesetzt, der der zweiten Spirale zugewandt ist. Durch diesen Zentralkörper kann in dem Übergabebereich zur zweiten Spirale die Pfropfbildung unterstützt und damit ein Rückstrom aus dem zweiten in den ersten Spiralförderer vermieden werden.

Bevorzugt wird überdies ein Ausführungsbeispiel der Vorrichtung, das sich dadurch auszeichnet, daß eine Vibrationseinrichtung vorgesehen ist, die der Vorverdichtung der festen Substanzen in der aufzubereitenden Flüssigkeiten dient. Durch die Vibration wird das Absetzen der Materialien unterstützt, deren spezifisches Gewicht über dem der Flüssigkeit liegt. Dies verbessert einerseits die Förderleistung der Vorrichtung, zusätzlich wird die Materialverdichtung im Übergabebereich zwischen dem ersten und zweiten Spiralförderer verbessert.

Weitere Ausgestaltungen ergeben sich aus den übrigen Unteransprüchen.

Aufgabe der Erfindung ist es außerdem, ein Verfahren zu schaffen, bei dem die oben genannten Nachteile vermieden werden.

Zur Lösung dieser Aufgabe wird auch ein Verfahren vorgeschlagen, das die in Anspruch 20 genannten Verfahrensschritte umfaßt und das sich dadurch auszeichnet, daß spezifischen Volumenströme der Spiralförderer zur Vermeidung unerwünschter Rückströme so gewählt werden, daß die Förderkapazität des zuführenden ersten Spiralförderers größer ist als die des abführenden zweiten Spiralförderers. Diese Ausführung führt zu dem gewünschten Pfropfeneffekt. Wesentlich ist, daß die hier angesprochenen Förderer lediglich beispielhaft als wellenlose Spiralförderer ausgebildet sind. Der Propfeneffekt aufgrund der gezielt gewählten spezifischen Förderkapazitäten kann auch bei anderen Endlosförderern erzielt werden, beispielsweise bei Schneckenförderern.

Bevorzugt wird eine Ausführungsform des Verfahrens, die sich dadurch auszeichnet, daß im Übergangsbereich zwischen dem ersten und zweiten Förderer eine Materialverdichtung eintritt, die einen Rückstrom von Flüssigkeiten aus den zweiten Spiralförderer in den ersten Spiralförderer verhindert.

Bevorzugt wird weiterhin eine Ausführungsform des Verfahrens, die sich dadurch auszeichnet, daß sich die Materialverdichtung ausschließlich im zweiten Spiralförderer einstellt. Das Rückstromverhalten kann dadurch auf einfache Weise gezielt beeinflußt werden.

Die Erfindung wird im folgenden anhand einer Zeichnung näher erläutert. Die einzige Figur zeigt eine Vorrichtung zum Fördern von Material von einem ersten Niveau auf ein höherliegendes zweites Niveau in stark schematisierter Seitenansicht.

Die Figur zeigt eine Vorrichtung 1 zur Förderung von Material von einem ersten Niveau N1 zu einem höherliegenden zweiten, Niveau N2. Sie umfaßt einen ersten Spiralförderer 3 und einen zweiten Spiralförderer 5. Bei dem hier dargestellten Ausführungsbeispiel ist der erste Spiralförderer 3 im wesentlichen horizontal angeordnet. Der zweite Spiralförderer ist in einem Winkel von 90° dazu angeordnet. Er verläuft hier also senkrecht. Je nach Einsatzgebiet und räumlichen Gegebenheiten sind auch Winkel von < 90° möglich.

Der erste Spiralförderer 3 umfaßt ein Gehäuse 7, in dessen Inneren eine erste Spirale 9 angeordnet ist. Das Gehäuse weist eine hier nach oben offene Eingabeöffnung 11 auf, in die, wie durch einen Pfeil angedeutet, das zu fördernde Material eingebracht wird. Die Eingabeöffnung 11 befindet sich hier an dem rechten Ende des Gehäuses 7, wo auch ein Motor 13 einer Antriebseinrichtung vorgesehen ist, der über eine Antriebswelle 15 mit der ersten Spirale 9 so gekoppelt ist, daß er diese in Rotation versetzen kann.

Das linke Ende des Gehäuses 7 schließt an einem Gehäuse 17 des zweiten Spiralförderers an, in dessen Inneren eine zweite Spirale 19 vorgesehen ist. Im Bereich des dem Gehäuse 7 abgewandten Endes des Gehäuses 17 ist eine Abgabeöffnung 21 vorgesehen, über die, wie durch einen Pfeil gekennzeichnet, Material abgegeben werden kann. In der Darstellung ist ein Motor 23 angedeutet, der über eine Antriebswelle 25 mit der zweiten Spirale gekoppelt ist und diese in Rotation versetzt.

Bei der hier wiedergegebenen Darstellung wurden zwei getrennte Motoren 13 und 23 gewählt. Es ist letztlich auch möglich, eine einzige Antriebseinrichtung vorzusehen, wofür dann aber entsprechende Drehmomentübertragungsmittel vorgesehen werden müssen. Der hier dargestellte Aufbau ist deshalb vorzuziehen, weil durch die getrennten Motoren 13 und 23 ein einfacher, flexibler Antrieb möglich ist.

Bei dem hier dargestellten Ausführungsbeispiel werden die Spiralen 9 und 19 des ersten Spiralförderers 1 und des zweiten Spiralförderers 2 mit derselben Geschwindigkeit angetrieben. Dabei ist es selbstverständlich auch möglich, zwischen dem Motoren 13 und 23 und den Spiralen 9 und 19 hier nicht dargestellte Zwischengetriebe zu verwenden.

Die Figur zeigt, daß das Gehäuse 7 dicht an einer Seitenwand 27 des Gehäuses 17 angeschlossen ist, so daß sich ein Übergabebereich 29 ergibt, in dem das in die Eingabeöffnung 11 eingefüllte Material von dem ersten Spiralförderer 3 an den zweiten Spiralförderer 5 übergeben wird.

Die hier dargestellte Vorrichtung zeichnet sich dadurch aus, daß die zweite Spirale 19 an ihrem dem ersten Spiralförderer 3 zugewandten ersten Ende 31 einen im Innenraum 33 dieser Spirale angeordneten Zentralkörper 35 aufweist, der sich über eine gewisse Höhe der zweiten Spirale 19 erstreckt, die beispielsweise dreimal so hoch ist, wie der Außendurchmesser des Gehäuses 17. Der Zentralkörper 35 kann rohrförmig ausgebildet sein. Vorzugsweise sind die Enden des Zentralkörpers dicht abgeschlossen. Seine Außenfläche liegt an der Innenfläche der zweiten Spirale 19 an.

Die zweite Spirale 19 ist in ihrem unteren Bereich, vorzugsweise über den Bereich, über den sich der Zentralkörper 35 erstreckt, als Doppelspirale ausgebildet. Das heißt, eine äußere Spirale 37 ist mit einer inneren Spirale 39 so verbunden, daß sich eine durchgehende Wendel ergibt. Die äußere Spirale kann dabei aus einem Flachmaterial mit einer Breite von 70 mm und einer Höhe von 20 mm gefertigt sein, während die innere Spirale 39 aus einem Bandmaterial von 45 mm Breite und 15 mm Dicke bestehen kann. Der Außendurchmesser der zweiten Spirale 19 beträgt im Bereich des Zentralkörpers 35 beispielsweise 280 mm, während der Innendurchmesser hier 50 mm beträgt. Entsprechend beträgt der Außendurchmesser des Zentralkörpers 35 ebenfalls 50 mm. Der Begriff Doppelspirale ist lediglich beispielhaft gewählt, da auch Mehrfachspiralen mit drei und mehr Einzelwendeln, die miteinander verbunden sind, eingesetzt werden können.

Die Steigung der zweiten Spirale 19 beträgt im Bereich des Zentralkörpers 35 beispielsweise 140 mm. Damit ist der in Richtung der Längserstreckung der zweiten Spirale 19 gemessene Abstand zweier aufeinanderfolgender Wendel der zweiten Spirale 19 angesprochen.

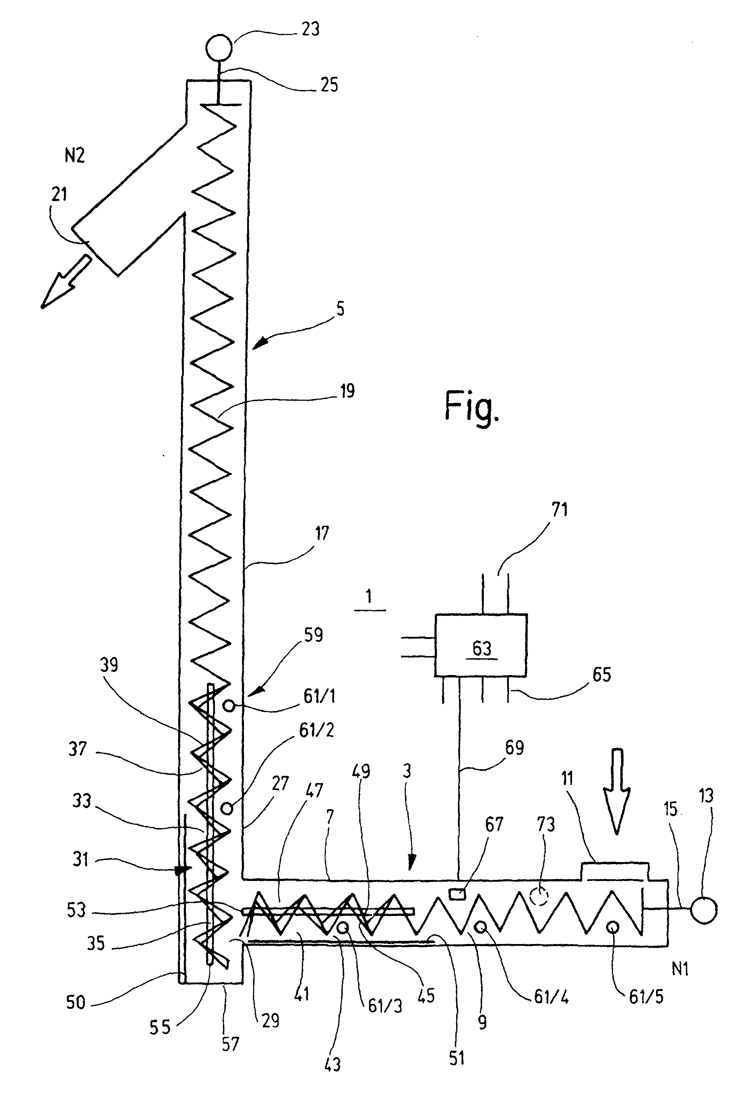

Die Darstellung gemäß Figur 1 zeigt, daß der oberhalb des Zentralkörpers 35 liegende Teil der zweiten Spirale als Einfachwendel ausgebildet ist, deren Außendurchmesser wiederum 280 mm und deren Innendurchmesser beispielsweise 140 mm beträgt.

Die Steigung der zweiten Spirale 19 beträgt in diesem oberen Bereich 140 mm bis 280 mm. Dabei wird die Steigung beziehungsweise das Steigungsverhältnis in Abhängigkeit vom Innen- beziehungsweise Außendurchmesser gewählt. Die kleinste Steigung entspricht dem Innendurchmesser und die größte Steigung dem Außendurchmesser.

Bei dem hier dargestellten Ausführungsbeispiel erstreckt sich der Zentralkörper 35 über den gesamten Bereich der Doppelspirale 37, 39. Es ist jedoch auch denkbar, die Länge des Zentralkörpers 35 kleiner zu wählen, als die der Doppelspirale. Wesentlich ist, daß der Zentralkörper 35 auf jeden Fall im unmittelbaren Übergabebereich 29 vorgesehen ist und sich vorzugsweise noch in Richtung des dem Motor 23 zugewandten Endes der zweiten Spirale 19 erstreckt.

Bereits aus der skizzenhaften Funktionsdarstellung in der hier vorliegenden Figur wird deutlich, daß die zweite Spirale 19 Bereiche mit verschiedenen Steigungen beziehungsweise unterschiedlichen Steigungsverhältnissen aufweist. Mit Steigungsverhältnis wird das Verhältnis zwischen Innen- beziehungsweise Außendurchmesser zur Steigung bezeichnet.

Deutlich ist hier die Steigung der zweiten Spirale 19 im unteren Bereich, also im Bereich des ersten Endes 31 beziehungsweise des Übergabebereichs 29 kleiner als in dem darüberliegenden Bereich der zweiten Spirale, der sich bis zur Abgabeöffnung 21 erstreckt.

Die Spirale 9 des auch als Horizontalförderer bezeichneten ersten Spiralförderers 3 kann durchgehend als Einfachspirale ausgebildet sein und eine einheitliche Steigung aufweisen. Es ist aber auch möglich, das linke Ende 41 der ersten Spirale 9, das dem Übergabebereich 29 beziehungsweise der zweiten Spirale 19 zugewandt ist, ebenfalls als Mehrfach-, vorzugsweise Doppelspirale auszubilden und eine äußere Spirale 43 sowie eine innere Spirale 45 vorzusehen. Auch diese Spiralen sind mit ihren Schmalseiten miteinander verbunden, so daß die in radialer Richtung gemessene Breite der Wendel der ersten Spirale breiter ist als in dem Bereich der Einfachspirale, der rechts von der Doppelspirale vorgesehen ist.

Im Innenraum 47 der ersten Spirale 9 kann auch hier ein Zentralkörper 49 vorgesehen sein, dessen Außendurchmesser so an den Innendurchmesser des Innenraums 47 angepaßt ist, daß der Zentralkörper den Innenraum praktisch ausfüllt.

Bei dem hier darstellten Ausführungsbeispiel entspricht die Länge des Zentralkörpers 49 dem Bereich der Doppelspirale 43, 45. Denkbar ist es auch, den Zentralkörper kürzer auszugestalten.

Der zweite Spiralförderer 5 ist an seinem dem ersten Spiralförderer 3 zugewandten Ende auf Höhe des ersten Spiralförderers 3 auf seiner dem ersten Spiralförderer 3 abgewandten Innenseite mit einer hier lediglich angedeuteten Verschleißschiene 50 versehen. Die zweite Spirale 19 ist hängend im Gehäuse 17 untergebracht und wird daher im Betrieb des ersten Spiralförderers 3 von dem herangeförderten Material ausgelenkt, hier nach links, und gegen die Innenseite des Gehäuses 7 gepreßt. Daher also die hier angedeutete Verschleißschiene 50, deren Länge an die auftretenden Belastungen angepaßt werden kann. Sie dient dazu, die Innenfläche des Gehäuses 17 vor einem zu großen Verschleiß im Betrieb der Vorrichtung 1 zu schützen.

Auf der Innenseite des Gehäuses 7 des ersten Spiralförderers 3 ist im Bereich seines linken Endes, welches dem Übergabebereich 29 zugewandt ist, ebenfalls eine Verschleißschiene 51 angedeutet. Sie erstreckt sich hier im wesentlichen über die Länge des Zentralkörpers 29 beziehungsweise der Doppelspirale 43, 45. Denkbar ist es jedoch auch, die Verschleißschiene über die gesamte Länge der Spirale 9 durchzuziehen.

Die Prinzipskizze in der Figur zeigt, daß die Stirnseite 53 der ersten Spirale 9 in einem -in axialer Richtung der zweiten Spirale 19 gemessenen-Abstand zur Stirnseite 55 der zweiten Spirale 19 angeordnet ist, die bis unmittelbar in den Endbereich 57 des Gehäuses 17 reicht. Durch diese Ausgestaltung ist sichergestellt, daß von der ersten Spirale 9 in den Übergabebereich 29 gefördertes Material sicher von der zweiten Spirale 19 erfaßt und weiterbefördert werden kann.

Die Vorrichtung 1 kann mit einer Vibrationseinrichtung 59 versehen sein, die mehrere Vibrationseinheiten 61/1 bis 61/5 aufweist, die über die Länge des ersten Spiralförderers 3 und/oder die Höhe des zweiten Spiralförderers 5 verteilt sind und der Verdichtung des von der Vorrichtung 1 geförderten Materials dienen. Die Vibrationseinrichtungen 61/1 bis 61/5 sind vorzugsweise außen auf die Gehäuse 7, 17 aufgesetzt, so daß sie nicht unmittelbar mit dem zu fördernden Material in Berührung treten und damit keiner Verschmutzung ausgesetzt sind.

Die im Bereich des ersten Spiralförderers 3 vorgesehenen Vibrationseinheiten 61/3 bis 61/5 dienen als Vorverdichtungseinheit.

Die Vorrichtung 1 ist mit einer Steuereinheit 63 versehen, die über geeignete Steuerleitungen 65, die hier lediglich angedeutet sind, mit den einzelnen Vibrationseinheiten 61/1 bis 61/5 verbunden ist. Mit Hilfe der Steuereinheit 63 ist es möglich, die Vibrationseinheiten einzeln und unterschiedlich lange anzusteuern und einzeln oder in Gruppen zu aktivieren. Es kann auch ein Sensor 67 vorgesehen sein, der über eine Leitung 69 mit der Steuereinheit 63 verbunden ist. Unter Verwendung dieses Sensors ist es vorteilhafterweise möglich, die Vibrationseinheiten 61/1 bis 61/5 in Abhängigkeit von der Konsistenz des in der Vorrichtung 1 beziehungsweise im ersten Spiralförderer 3 vorliegenden Materials anzusteuern und zu aktivieren beziehungsweise deaktivieren. Die Steuereinheit 63 kann auch über geeignete Verbindungsleitungen 71 mit der Antriebseinheit beziehungsweise den Motoren 13 und 23 verbunden sein, um diese zu aktivieren beziehungsweise deren Drehzahl zu beeinflussen.

Im folgenden wird auf die Funktion der Vorrichtung und auf das erfindungsgemäße Verfahren näher eingegangen:

Die Vorrichtung dient dazu, Material, das über die Eingabeöffnung 11 in den ersten Spiralförderer 3 eingebracht wird, zur Abgabeöffnung 21 zu fördern, deren Niveau N2 höher ist als das Niveau N1 der Eingabeöffnung. Das zu fördernde Material wird zusammen mit Wasser in die Eingabeöffnung 11 eingebracht, so daß im Bereich des ersten Spiralförderers 3 eine Entwässerung des Materials erforderlich ist. Bei der Entwässerung wird das Wasser von dem Material getrennt und tritt durch einen hier angedeuteten Auslaß 73 aus.

Für die folgende Beschreibung spielt es keine Rolle, ob durch die Eingabeöffnung 11 beispielsweise Müll eingebracht wird oder Sand, der im Bereich einer Kanalisation anfällt. In beiden Fällen ist es erforderlich, die festen Bestandteile von dem Wasser zu trennen. Dabei kann eine Trennung der festen und flüssigen Substanzen allein aufgrund der Schwerkraft erfolgen. Es ist aber auch möglich, eine Vibrationseinrichtung 59 vorzusehen. Dies ist insbesondere dann erforderlich, wenn in die Eingabeöffnung 11 quasi schlammartiges Material eingebracht wird, daß vorverdichtet werden muß, damit es überhaupt mit Hilfe der Spirale 9 und 19 gefördert werden kann.

Wird eine Vibrationseinrichtung 59 eingesetzt, so kann damit nicht nur eine Verdichtung, sondern auch eine Reinigung der festen Substanzen erreicht werden, da die festen Bestandteile, beispielsweise Sandkörner, durch die Vibration aneinanderreiben, so daß anhaftende organische Verunreinigungen entfernt und mit dem Wasser über den Auslaß 73 ausgetragen werden können.

Das vorverdichtete und zumindest teilweise entwässerte Material wird durch die von dem Motor 13 in Rotation versetzte erste Spirale 9 von der Eingabeöffnung 11 zum Übergabebereich 29 gefördert. Die erste Spirale 9 drängt das Material in den Innenraum 33 der zweiten Spirale 19, so daß diese das Material weiterbefördern kann. Durch geeignete Wahl der Förderkapazitäten der Spiralförderer und/oder den Zentralkörper 35 wird die freie Beweglichkeit des von der ersten Spirale 9 angelieferten Materials im Bereich der zweiten Spirale 19 eingeschränkt, so daß sich im Übergabebereich 29 eine Materialverdichtung einstellt. Diese kann noch durch die Vibrationseinheiten 61/1 und 61/2 gefördert werden.

Im Bereich des Zentralkörpers 35 und der Doppelspirale 37, 39 findet innerhalb des zweiten Spiralförderers 5 eine Verdichtung des vom ersten Spiralförderer 3 angelieferten Materials statt.

Um eine Verstopfung des zweiten Spiralförderers 5 zu vermeiden, ist die Steigung beziehungsweise das Steigungsverhältnis in dem Bereich oberhalb des Zentralkörpers 35 so gewählt, daß eine Entspannung des Materials gegeben ist. Beispielsweise beträgt die Förderleistung im Bereich der Doppelspirale etwa 0,4 m³/n, während Sie im oberen Bereich der zweiten Spirale 19 circa 0,9 m³/n und mehr betragen kann.

Wird nun die Vorrichtung 1 stillgesetzt, fällt das Material im Inneren des Gehäuses 17 des zweiten Spiralförderers 5 zurück. Aufgrund der Materialverdichtung im Übergabebereich 29 ist jedoch sichergestellt, daß kein Rückfluß aus dem hier senkrechten zweiten Spiralförderer 5 in den hier horizontal angeordneten ersten Spiralförderer 3 eintritt. Es wird also ein Stopf- beziehungsweise Pfropfen-Effekt erzielt, der keines besonderen Aufwandes bedarf und einen einfachen Aufbau der Vorrichtung 1 erlaubt.

Es ist ohne weiteres ersichtlich, daß mit Hilfe der Steuereinheit 63 die Vibrationseinrichtung 59 beziehungsweise deren Vibrationseinheiten 61/1 bis 61/5 gemeinsam oder getrennt so angesteuert und aktiviert werden können, daß eine optimale Verdichtung beziehungsweise Vorverdichtung des zu fördernden Materials eintritt. Überdies ist es möglich, mit Hilfe der Steuereinheit 63 die Drehgeschwindigkeit der Motoren 13 und 23 an die Materialdichte anzupassen. Eine wesentliche Vereinfachung stellt dabei der Gesichtspunkt dar, daß die Motoren 13 und 23 vorzugsweise mit gleicher Umdrehungsgeschwindigkeit laufen.

Es zeigt sich auch, daß die Verhinderung eines Rückstroms durch den Zentralkörper 49 und die Doppelspirale 43, 45 der ersten Spirale 9 des ersten Spiralförderers 3 verbessert werden kann, daß aber auch allein durch die spezielle Ausgestaltung der zweiten Spirale 19 eine Rückstromsicherung erzielt wird, selbst wenn die erste Spirale 17 durchgehend als Einfachspirale ausgebildet ist.

Aus dem oben Gesagten ist ohne weiteres ersichtlich, daß der grundsätzliche Aufbau der Vorrichtung 1 auch dann gegeben ist, wenn der erste Spiralförderer 3 und/oder der zweite Spiralförderer 5 mit mehr als einer Spirale ausgebildet sind/ist. Wesentlich ist, daß im Betrieb der Vorrichtung beziehungsweise bei Durchführung des Verfahrens im Übergabebereich 29 eine Materialverdichtung sichergestellt ist, die einen Rückstrom des Materials aus dem zweiten Spiralförderer in den ersten Spiralförderer verhindert, wenn die Vorrichtung 1 stillgesetzt wird.

Aus der Prinzipskizze der Figur wird deutlich, daß es für die Grundfunktion der Vorrichtung 1 belanglos ist, ob der Durchmesser der ersten Spirale 9 größer, kleiner oder gleich ist wie der Außendurchmesser, der zweiten Spirale 19.

Auch die Steigungen der ersten Spirale 9 und der zweiten Spirale 19 können frei gewählt werden. Wesentlich ist in allen Fällen, daß die spezifischen Volumenströme des horizontalen ersten Spiralförderers 3 und des -hier vertikalen- zweiten Spiralförderers 5 so eingestellt sind, daß die Förderkapazität des zweiten Spiralförderers 5 geringer ist als die des ersten Spiralförderers 3.

## Patentansprüche

1. Vorrichtung zum Fördern von Material von einem ersten Niveau auf ein höher liegendes zweites Niveau, mit einem mindestens eine erste Fördereinrichtung aufweisenden Förderer, dem das zu fördernde Material zugeführt wird, und mit einem mit dem ersten Förderer zusammenwirkenden, mindestens eine zweite Fördereinrichtung aufweisenden zweiten Förderer, der das von dem ersten Förderer geförderte Material an eine Abgabeöffnung weiterfördert und der gegenüber dem ersten Förderer unter einem Winkel von ≤ 90°angeordnet ist, wobei die erste und zweite Fördereinrichtung als wellenlose Spirale (9, 19) und der erste und zweite Förderer als wellenlose Spiralförderer (3,5) ausgebildet sind, **dadurch gekennzeichnet dass** die zweite wellenlose Spirale (19) lediglich an ihrem dem ersten Spiralförderer (3) zugewandten ersten Ende (31) einen in ihrem Innenraum (33) angeordneten Zentralkörper (35) und in der übrigen Länge des Förderers immer noch einen freien Innenraum aufweist.

2. Vorrichtung nach Anspruch 1, **dadurch gekennzeichnet, daß** die zweite Spirale (19) zumindest an ihrem ersten Ende (31) als Mehrfach- vorzugsweise Doppelspirale (äußere Spirale (37), innere Spirale (39)) ausgebildet ist.

3. Vorrichtung nach Anspruch 1 oder 2, **dadurch gekennzeichnet, daß** der Innendurchmesser der zweiten Spirale (19) im Bereich ihres dem ersten Spiralförderer (3) zugewandten ersten Endes (31) kleiner ist als im Bereich ihres gegenüberliegenden Endes.

4. Vorrichtung nach einem der vorhergehenden Ansprüche, **dadurch gekennzeichnet, daß** die zweite Spirale (19) Bereiche mit unterschiedlicher Steigung beziehungsweise mit verschiedenen Steigungsverhältnissen aufweist.

5. Vorrichtung nach einem der vorhergehenden Ansprüche, **dadurch gekennzeichnet, daß** die Steigung der zweiten Spirale (19) an ihrem ersten Ende (31) kleiner ist als in den übrigen Bereichen.

6. Vorrichtung nach einem der vorhergehenden Ansprüche, **dadurch gekennzeichnet, daß** die Steigung der zweiten Spirale (19) zumindest im Bereich ihres ersten Endes (31) von der der ersten Spirale (9) abweicht.

7. Vorrichtung nach einem der vorhergehenden Ansprüche, **dadurch gekennzeichnet, daß** die erste Spirale (9) zumindest bereichsweise, vorzugsweise an ihrem der zweiten Spirale (19) zugewandten Abgabeende als Mehrfach- vorzugsweise Doppelspirale (äußere Spirale (43), innere Spirale (45)) ausgebildet ist.

8. Vorrichtung nach einem der vorhergehenden Ansprüche, **dadurch gekennzeichnet, daß** die erste Spirale (9) zumindest bereichsweise, vorzugsweise an ihrem der zweiten Spirale (19) zugewandten Abgabeende, einen im Innenraum (47) der ersten Spirale (9) angeordneten Zentralkörper (49) aufweist.

9. Vorrichtung nach einem der vorhergehenden Ansprüche, **dadurch gekennzeichnet, daß** der Zentralkörper (49) rohrförmig ausgebildet ist.

10. Vorrichtung nach einem der vorhergehenden Ansprüche, **dadurch gekennzeichnet, daß** der erste Spiralförderer (3) zumindest an seinem dem zweiten Spiralförderer (5) zugewandten Ende mindestens eine der ersten Spirale (9) zugeordnete Verschleißschiene (51) und/oder der zweite Spiralförderer (5) zumindest an seinem, dem ersten Spiralförderer (3) zugewandten Ende mindestens eine der zweiten Spirale (19) zugeordnete Verschleißschiene (50) aufweist.

11. Vorrichtung nach einem der vorhergehenden Ansprüche, **gekennzeichnet durch** eine Vorverdichtungseinrichtung.

12. Vorrichtung nach einem der vorhergehenden Ansprüche, **dadurch gekennzeichnet, daß** die Vorverdichtungseinrichtung eine Vibrationseinrichtung (59) umfaßt.

13. Vorrichtung nach Anspruch 12, **dadurch gekennzeichnet, daß** die Vibrationseinrichtung (59) mindestens eine Vibrationseinheit (61/1;61/2;61/3; 61/4;61/5) umfaßt.

14. Vorrichtung nach Anspruch 12 oder 13, **dadurch gekennzeichnet, daß** die Vibrationseinheit(en) (61/1 bis 61/5) außen an den ersten Spiralförderer (3) und/oder zweiten Spiralförderer (5) angesetzt ist.

15. Vorrichtung nach einem der Ansprüche 11 bis 14, **gekennzeichnet durch** eine mit der Vibrationseinheit (59) zusammenwirkende Steuereinheit (63), die vorzugsweise mindestens einen die Konsistenz des zu fördernden Materials erfassenden Sensor (67) umfaßt und die die Vibrationseinheit (59) in Abhängigkeit von der Konsistenz des zu fördernden Materials aktiviert.

16. Vorrichtung nach einem der Ansprüche 12 bis 15, **dadurch gekennzeichnet, daß** die Vibrationseinrichtung (59) mehrere über die Länge des ersten Spiralförderers (3) verteilt angeordnete Vibrationseinheiten (61/3 bis 61/5) umfaßt.

17. Vorrichtung nach einem der Ansprüche 12 bis 16, **dadurch gekennzeichnet, daß** die Vibrationseinrichtung (59) mehrere über die Länge des zweiten Spiralförderers (5) verteilt angeordnete Vibrationseinheiten (61/1;61/2) umfaßt.

18. Vorrichtung nach einem der vorhergehenden Ansprüche, **dadurch gekennzeichnet, daß** der erste Spiralförderer (3) mit Hilfe des Sensors (67) so antreibbar ist, daß die Materialzufuhr in Abhängigkeit von der Dichte des zu fördernden Materials erfolgt.

19. Vorrichtung nach einem der vorhergehenden Ansprüche, **dadurch gekennzeichnet, daß** der erste Spiralförderer (3) und/oder zweite Spiralförderer (5) mehrere Spiralen aufweist.

20. Verfahren zum Fördern von Material von einem ersten Niveau auf ein höher liegendes zweites Niveau mittels zweier Förderer, insbesondere mittels einer Vorrichtung nach einem der Ansprüche 1 bis 19, **dadurch gekennzeichnet, dass** der erste als Spiralförderer ausgebildeten Förderer und der zweite als Spiralförderer ausgebildete Förderer so eingestellt werden, dass der Volumendurchsatz des zweiten Spiralförderers geringer ist als der des ersten Spiralförderers.

21. Verfahren nach Anspruch 20, **dadurch gekennzeichnet, daß** die Förderleistung des ersten Spiralförderers, der Material an den zweiten Spiralförderer liefert, auf dessen Förderleistung so eingestellt wird, daß sich im Übergabebereich der Spiralförderer eine Materialverdichtung einstellt.

22. Verfahren nach Anspruch 19, **dadurch gekennzeichnet, daß** sich die Materialverdichtung ausschließlich im zweiten Spiralförderer einstellt.

## Claims

1. A device for the conveying of a material from a first level onto a higher second level with a conveyor incorporating at least one first conveying function into which the material to be conveyed is positioned, and with at least one second conveyor operatively connected with the first conveyor and incorporating a second conveying function which conveys the material elevated by the first conveyor towards a dispensing opening, and which is positioned opposite the first conveyor at an angle of ≤ 90°, whereby the first and the second conveying functions are shaped as a shaftless spiral (9, 19), and whereby the first and the second conveyor are shaped as a shaftless spiral conveyor (3, 5), **characterised in that** the second shaftless spiral (19) incorporates only at its first end (31) that is directed towards the spiral conveyor (3) a central body (35) that is positioned within its interior (33) and that furthermore incorporates a vacant interior along the length of the conveyor.

2. A device according to claim 1, **characterised in that** the second spiral (19) is formed in the shape of a multi- and preferably a double spiral (external spiral (37), internal spiral (39)) at least at its first end (31).

3. A device according to claim 1 or 2, **characterised in that** the internal diameter of the second spiral (19) is smaller in the area of the first end (31) that is directed towards its first spiral conveyor (3) than in the area of the opposing end.

4. A device according to one of the preceding claims, **characterised in that** the second spiral (19) incorporates areas with different gradients, i.e. with different gradient ratios.

5. A device according to one of the preceding claims, **characterised in that** the gradient of the second spiral (19) is smaller at its first end (31) than in the other areas.

6. A device according to one of the preceding claims, **characterised in that** the gradient of the second spiral (19) deviates from that of the first spiral (9) at least in the area of its first end (31).

7. A device according to one of the preceding claims, **characterised in that** the first spiral (9) is formed in the shape of a multi- and preferably a double spiral (external spiral (43), internal spiral (45)) at least in some areas, and preferably at the dispensing end that is directed towards the second spiral (19).

8. A device according to one of the preceding claims, **characterised in that** the first spiral (9) incorporates at least in some areas, and preferably at its dispensing end that is directed towards the second spiral (19), a central body (49) that is positioned within the interior space (47) of the first spiral (9).

9. A device according to one of the preceding claims, **characterised in that** the central body (49) is generally tubular.

10. A device according to one of the preceding claims, **characterised in that** the first spiral conveyor (3) incorporates at least at the end that is directed towards the second spiral conveyor (5) at least one wear rail (51) that is allocated to the first spiral (9) and/or **in that** the second spiral conveyor (5) incorporates at least at the end that is directed towards the first spiral conveyor (3) at least one wear rail (50) that is allocated to the second spiral (19).

11. A device according to one of the preceding claims, **characterised in that** it incorporates a pre-sealing device.

12. A device according to one of the preceding claims, **characterised in that** the pre-sealing device incorporates a vibration device (59).

13. A device according to claim 12, **characterised in that** the vibration device (59) incorporates at least one vibration unit (61/1; 61/2; 61/3; 61/4; 61/5).

14. A device according to claim 12 or 13, **characterised in that** the vibration unit(s) (61/1 to 61/5) is/are connected to the outside of the first spiral conveyor (3) and/or the second spiral conveyor (5).

15. A device according to one of the preceding claims 11 to 14, **characterised in that** it incorporates a control unit (63) that is operatively connected to the vibration device (59) and that preferably incorporates at least one sensor (67) for the recording of the consistency of the material that is to be conveyed, and **in that** the vibration device (59) is activated in dependency upon the consistency of the material that is to be conveyed.

16. A device according to one of the preceding claims 12 to 15, **characterised in that** the vibration device (59) incorporates several vibration units (61/3 to 61/5) positioned along the length of the first spiral conveyor (3).

17. A device according to one of the preceding claims 12 to 16, **characterised in that** the vibration device (59) incorporates several vibration units (61/1; 61/2) positioned along the length of the second spiral conveyor (5).

18. A device according to one of the preceding claims, **characterised in that** the first spiral conveyor (3) can be operated with the aid of the sensor (67) in such a way that the material feed will occur in dependency upon the density of the material that is to be conveyed.

19. A device according to one of the preceding claims, **characterised in that** the first spiral conveyor (3) and/or the second spiral conveyor (5) incorporate several spirals.

20. A method for the conveying of a material from a first level onto a higher second level with two conveyors, and especially with a device according to one of the claims 1 to 19, **characterised in that** the first conveyor that is shaped as a spiral conveyor and the second conveyor that is shaped as a spiral conveyor are adjusted in such a way that the volume throughput of the second spiral conveyor is lower than that of the first spiral conveyor.

21. A method according to claim 20, **characterised in that** the conveying capacity of the first spiral conveyor that supplies material to the second spiral conveyor is adjusted according to the conveying capacity of the same in such a way that a concentration of material is created within the transition area between the spiral conveyors.

22. A method according to claim 19, **characterised in that** the said concentration of material is created exclusively within the second spiral conveyor.

## Revendications

1. Dispositif pour transporter des matériaux d'un premier niveau à un second niveau situé plus haut, doté d'un convoyeur, vers lequel les matériaux à transporter sont apportés, présentant au moins un premier dispositif de transport, et d'un second convoyeur, coopérant avec le premier convoyeur, présentant au moins un second dispositif de transport, lequel second convoyeur retrarisporte les matériaux transportés par le premier convoyeur vers une ouverture de sortie, et qui est placé sous un angles ≤ 90° par rapport au premier convoyeur, le premier et le second dispositifs de transport étant formés comme des spirales sans arbre (9, 19), et le premier et le second convoyeurs étant formés comme des convoyeurs à spirale sans arbre (3, 5), **caractérisé en ce que** la seconde spirale sans arbre (19) présente, uniquement sur sa première extrémité (31) tournée vers le premier convoyeur à spirale (3), un corps central (35) placé dans son espace intérieur (33) et présente encore un espace intérieur libre dans la longueur restante du convoyeur.

2. Dispositif selon la revendication 1, **caractérisé en ce que** la seconde spirale (19) est formée, au moins sur sa première extrémité (31), comme spirale multiple, de préférence double, (spirale extérieure (37), spirale intérieure (39)).

3. Dispositif selon la revendication 1 ou 2, **caractérisé en ce que** le diamètre intérieur de la seconde spirale (19), dans la partie de sa première extrémité (31) tournée vers le premier convoyeur à spirale (3), est plus petit que dans la partie de son extrémité opposée.

4. Dispositif selon l'une des revendications précédentes, **caractérisé en ce que** la seconde spirale (19) présente des parties avec respectivement un pas différent ou des taux de pas différents.

5. Dispositif selon l'une des revendications précédentes, **caractérisé en ce que** le pas de la seconde spirale (19) est plus petit, sur sa première extrémité (31), que dans les parties restantes.

6. Dispositif selon l'une des revendications précédentes, **caractérisé en ce que** le pas de la seconde spirale (19) est différent de celui de la première spirale (9), au moins dans la partie de sa première extrémité (31).

7. Dispositif selon l'une des revendications précédentes, **caractérisé en ce que** la première spirale (9), au moins en partie, est formée, de préférence à son extrémité de sortie toumée vers la seconde spirale (19), comme spirale multiple, de préférence double, (spirale extérieure (43), spirale intérieure (45)).

8. Dispositif selon l'une des revendications précédentes, **caractérisé en ce que** la première spirale (9), au moins en partie, présente, de préférence à son extrémité de sortie tournée vers la seconde spirale (19), un corps central (49) disposé dans l'espace intérieur (47) de la première spirale (9).

9. Dispositif selon l'une des revendications précédentes, **caractérisé en ce que** le corps central (49) est formé comme un tube.

10. Dispositif selon l'une des revendications précédentes, **caractérisé en ce que** le premier convoyeur à spirale (3) présente, au moins à son extrémité tournée vers le second convoyeur à spirale (5), au moins un rail d'usure (51) attribué à la première spirale (9) et/ou le second convoyeur à spirale (5), au moins à son extrémité tournée vers le premier convoyeur à spirale (3), au moins un rail d'usure (50) attribué à la seconde spirale (19).

11. Dispositif selon l'une des revendications précédentes, **caractérisé par** un dispositif de précompactage.

12. Dispositif selon l'une des revendications précédentes, **caractérisé en ce que** le dispositif de précompactage comprend un dispositif à vibrations (59).

13. Dispositif selon la revendication 12, **caractérisé en ce que** le dispositif à vibrations (59) comprend au moins une unité à vibrations (61/1 ; 61/2, 61/3 ; 61/4 ; 61/5).

14. Dispositif selon la revendication 12 ou 13, **caractérisé en ce que** la/les unité(s) à vibrations (61/1 à 61/5) est/sont fixées extérieurement sur le premier convoyeur à spirale (3) et/ou le second convoyeur à spirale (5).

15. Dispositif selon l'une des revendications 11 à 14, **caractérisé par** une unité de commande (63) coopérant avec l'unité à vibrations (59), laquelle unité de commande comprend au moins un capteur (67) détectant la consistance du matériau à transporter et active l'unité à vibrations (59) en fonction de la consistance du matériau à transporter.

16. Dispositif selon l'une des revendications 12 à 15, **caractérisé en ce que** l'unité à vibrations (59) comprend plusieurs unités à vibrations (61/3 à 61/5) disposées de manière répartie sur la longueur du premier convoyeur à spirale (3).

17. Dispositif selon l'une des revendications 12 à 16, **caractérisé en ce que** l'unité à vibrations (59) comprend plusieurs unités à vibrations (61/1 ; 61/2) disposées de manière répartie sur la longueur du second convoyeur à spirale (5).

18. Dispositif selon l'une des revendications précédentes, **caractérisé en ce que** le premier convoyeur à spirale (3) peut être entraîné à l'aide du capteur (67) de telle sorte que l'alimentation en matériau se fait en fonction de la densité du matériau à transporter.

19. Dispositif selon l'une des revendications précédentes, **caractérisé en ce que** le premier convoyeur à spirale (3) et/ou le second convoyeur à spirale (5) présente plusieurs spirales.

20. Procédé pour transporter des matériaux d'un premier niveau vers un second niveau situé plus haut, au moyen de deux convoyeurs, notamment au moyen d'un dispositif selon l'une des revendications 1 à 19, **caractérisé en ce que** le premier convoyeur formé comme convoyeur à spirale et le second convoyeur formé comme convoyeur à spirale sont réglés de telle sorte que le débit volume du second convoyeur à spirale est inférieur à celui du premier convoyeur à spirale.

21. Procédé selon la revendication 20, **caractérisé en ce que** la capacité de transport du premier convoyeur à spirale, qui livre le matériau au second convoyeur à spirale, est réglée à sa capacité de transport de telle sorte qu'une compression de matériau apparaît dans la partie de remise du convoyeur à spirale.

22. Procédé selon la revendication 19, **caractérisé en ce que** la compression de matériau apparaît exclusivement dans le second convoyeur à spirale.
